# EUROPÄISCHE PATENTSCHRIFT

(11) **EP 0 767 722 B1**
(45) Veröffentlichungstag und Bekanntmachung des Hinweises auf die Patenterteilung: **29.04.1998**
(21) Anmeldenummer: 95944280.7
(22) Anmeldetag: 14.07.1995
(51) Int. Cl.: B23Q 16/10

(54) **RUNDSCHALTVORRICHTUNG**
INDEXING DEVICE
DISPOSITIF A TRANSFERT CIRCULAIRE

(30) Priorität: 31.08.1994 DE 4430897
(43) Veröffentlichungstag der Anmeldung: 16.04.1997
(73) Patentinhaber: Schöller, Felix, 73760 Ostfildern (DE)
(72) Erfinder: Schöller, Felix, 73760 Ostfildern (DE)
(74) Vertreter: Patentanwälte Bartels und Partner
(86) Internationale Anmeldenummer: EP9502765
(87) Internationale Veröffentlichungsnummer: WO9606708

(56) Entgegenhaltungen:
- DE-A- 2 628 677
- DE-A- 2 721 671
- DE-U- 9 102 314
- US-A- 4 015 487
- PATENT ABSTRACTS OF JAPAN vol. 14 no. 203 (M-966) ,25.April 1990 & JP,A,02 041850 (NISSAN MOTOR) 13.Februar 1990,

## Beschreibung

Die Erfindung betrifft eine Rundschaltvorrichtung mit den Merkmalen des Anspruches 1.

Bei einer gattungsgemäßen Rundschaltvorrichtung nach der JP-A-2 041 850 bildet der vierte Ringkörper ausschließlich entlang seines Außenumfanges eine Führung für den längsverschiebbaren dritten Ringkörper. Die dort zum Einsatz kommende bekannte Hub- und Senkvorrichtung weist zwei über den vierten Ringkörper voneinander getrennte, wechselweise mit Fluid befüllbare Hohlkammern auf. Bei dieser bekannten Lösung wird auf hydraulisch ansteuerbare separate Hubkolben verzichtet, wobei dennoch die bekannte Rundschaltvorrichtung konstruktiv groß aufbaut. Auch kommt es zu einem nicht optimalen Kraftfluß, da beim Anheben des dritten Ringkörpers zwecks Ineingriffbringen der Planverzahnungen miteinander ein ungünstiges Kraftmoment entsteht durch den gegenüber den Planverzahnungen vorstehenden außermittigen Versatz des dritten Ringkörpers.

Bei einer Rundschaltvorrichtung nach der DE 26 28 677 C2 ist es bekannt, das Radiallager des Rundschalttisches zwischen den beiden koaxial zueinander angeordneten, mit je einer der ersten oder zweiten Planverzahnungen versehenen ersten und zweiten Ringkörper anzuordnen, so daß gegenüber den bisher bekannten Lösungen der Rundlauffehler dieses Schalttisches verringert ist. Die die Planverzahnungen tragenden Ringkörper können dabei selbst als Lagerkörper ausgebildet sein und sind auf ihren Lagerflächen sehr genau bearbeitet. Eine genaue Bearbeitung dieser Ringe ist aufgrund der an diesen vorgesehenen Planverzahnungen ohnedies notwendig und die für die Rundlaufgenauigkeit notwendigen Teile sind auf einem engen Bauraum unterzubringen. Sofern die Ringe mit ihren Planverzahnungen exakt gefertigt sind, sind die Teilgenauigkeit und die Rundlaufgenauigkeit des Rundschalttisches weitgehend sichergestellt.

Um den axial verschiebbaren dritten Ringkörper bei der bekannten Lösung axial nach oben zu verschieben und mithin seine dritte Planverzahnung außer Eingriff mit den beiden anderen Planverzahnungen der anderen Ringkörper zu bringen, sind im Ständer der Rundschaltvorrichtung umfangsseitig in vorgebbaren definierten Abständen voneinander Hubkolben einer hydraulisch betätigbaren Hubvorrichtung angeordnet, die zentral von einer Versorgungseinheit angesteuert den Entkopplungsvorgang vornehmen. Für einen Absenkvorgang und mithin für ein Ineingriffbringen der Planverzahnungen miteinander, die auch als "Hirth-Verzahnungen" bezeichnet werden, werden die Hubkolben der Hubvorrichtung drucklos gemacht und ein Tellerfederpaket, das am jeweiligen Hubkolben angreift, übernimmt die axiale Rückstellbewegung. Mit der Kraft der Federpakete wird dann der Eingriff der dritten Planverzahnung des dritten Ringkörpers mit den anderen Planverzahnungen für den weiteren Betrieb der Rundschaltvorrichtung sichergestellt.

Bei dieser Art des konstruktiven Aufbaues ist eine Vielzahl von Hubkolben und Tellerfederpaketen im Ständer notwendig, deren hydraulische Ansteuerung einschließlich der notwendigen Verrohrung aufwendig und mithin teuer ist. Ferner ist die Hub- und Senkvorrichtung bei den bekannten Rundschaltvorrichtungen im Ständer eingebaut und selbst bei einem Abheben des Rundschalttisches von der Vorrichtung über ein Hebezeug od.dgl. für die Wartung und Montagearbeiten nur sehr schwer zugänglich, was auch die dahingehenden Kosten erhöht.

Durch eine gattungsfremde Rundschaltvorrichtung nach der DE 21 37 698 C3 ist es bekannt, die Senkvorrichtung hydraulisch betätigbar zu gestalten und hierfür mit Fluid befüllbare Hohlkammern vorzusehen, die endseitig an dem dritten Ringkörper mit der dritten Planverzahnung angeordnet sind und die wechselweise angesteuert und mit Fluid befüllt die dritte Planverzahnung in oder außer Eingriff mit den beiden anderen Planverzahnungen zum Festlegen bzw. Freigeben des Rundschalttisches bringen. Mithin wird bei dieser bekannten Rundschaltvorrichtung auf einen hydraulisch ansteuerbaren separaten Hubkolben verzichtet und zum Anheben des dritten Ringkörpers mit der dritten Planverzahnung wirkt auf diesen außermittig und neben den Planverzahnungen der Fluiddruck auf den dritten Ringkörper ein. Auch beim Absenken des dritten Ringkörpers kommt es zu einem ungleichförmig auf ihn einwirkenden Fluiddruck und zu einem nicht optimalen Kraftfluß. Der durch die ungleichförmig erfolgende Krafteinleitung entstehende "Versatz" zwischen den Ringkörpern mit ihren Planverzahnungen und ein damit notwendig gewordener Toleranzausgleich wird durch Teilung des dritten Ringkörpers in zwei Teilringe erreicht, die jeweils mit einer dritten Planverzahnung versehen über ein elastisch nachgiebiges Zwischenelement miteinander verbunden sind. Zum einen geht aufgrund dieses einem Verschleiß unterliegenden Zwischenelementes die für die sichere Funktion der Hub- und Senkvorrichtung notwendige Steifigkeit verloren und auch die notwendige Einrastgenauigkeit der Planverzahnungen ineinander für ein Festlegen der Rundschaltvorrichtung ist nicht gewährleistet. Darüber hinaus ist die Hub- und Senkvorrichtung dieser bekannten Rundschaltvorrichtung kompliziert aufgebaut und für Wartungs- und Montagearbeiten nur schwer zugänglich.

Ausgehend von diesem Stand der Technik liegt der Erfindung die Aufgabe zugrunde, eine Rundschaltvorrichtung zu schaffen, die klein aufbaut, die kostengünstig in der Herstellung sowie montage- und wartungsfreundlich und funktionssicher im Betrieb ist. Eine dahingehende Aufgabe löst eine Rundschaltvorrichtung mit den Merkmalen des Anspruches 1.

Dadurch, daß gemäß dem kennzeichnenden Teil des Anspruches 1 in Verbindung mit den Merkmalen des Oberbegriffes die Hubvorrichtung mindestens einen Hubkolben aufweist, der axial verfahrbar innerhalb des Ständers gelagert ist und mit dem dritten Ringkörper zusammenwirkt und daß der vierte Ringkörper unter Bildung der Führung längs seines Innen- und Außenumfanges in die Ringnut des dritten Ringkörpers eingreift, braucht die dahingehende Hub- und Senkvorrichtung längs des Radialumfanges in Abhängigkeit von der Größe der Rundschaltvorrichtung nur noch an wenigen Stellen vorgesehen zu werden. Neben einem vereinfachten hydraulischen Ansteuervorgang für die dahingehende Vorrichtung ist auch die Teilezahl verringert, was die Herstellkosten senkt und mithin auch den späteren Montage- und Reparaturaufwand verringert. Die hydraulisch betätigbare Hub- und Senkvorrichtung benötigt wenig Bauraum und kann mithin im Bereich der Unterseite des Rundschalttisches angeordnet werden, so daß beim Abheben desselben die bewegbaren Teile der Hub- und Senkvorrichtung auf der Oberseite des Ständers verbleiben und von allen Seiten aus her gut zugänglich sind. Da weniger Teile zum Einsatz kommen, die im übrigen im wesentlichen verschleißfrei arbeiten, ist gegenüber bisher bekannten Lösungen auf diesem Gebiet insgesamt die Funktionssicherheit erhöht.

Durch die Mittenführung des dritten Ringkörpers längs des vierten Ringkörpers ist eine sehr steife Konstruktion gewährleistet mit derart optimiertem Kraftfluß, daß die zentral und mittig mittels des Fluiddruckes eingeleitete Kraft beim Absenken des dritten Ringkörpers gleichmäßig auf die in Eingriff befindlichen Planverzahnungen einwirkt, so daß ohne Verwendung von elastischen Zwischengliedern die benötigten Toleranzen eingehalten werden, was mit zur Funktionssicherheit der erfindungsgemäßen Rundschaltvorrichtung mit beiträgt. Durch den jeweiligen Hubkolben läßt sich ebenso mittenzentriert und mit optimierter Krafteinleitung der Entkopplungsvorgang der Planverzahnungen erreichen.

Bei einer bevorzugten Ausführungsform der erfindungsgemäßen Rundschaltvorrichtung wird diese optimierte Krafteinleitung noch weiter dadurch begünstigt, daß die drei Planverzahnungen von dem dritten Ringkörper und bündig mit diesem abschließend abgedeckt sind und daß der in der Hohlkammer erzeugbare Fluidstrom ebenso wie der Kolbendruck des Hubkolbens zentrisch zwischen den drei Planverzahnungen verlaufend auf diese einwirkt.

Sofern bei einer weiteren bevorzugten Ausführungsform der erfindungsgemäßen Rundschaltvorrichtung für das Zusammenwirken des Hubkolbens mit dem dritten Ringkörper ein Betätigungsteil des Hubkolbens unter Durchgriff des zweiten Ringkörpers in berührender Anlage mit dem dritten Ringkörper ist, ist eine feste mechanische Verbindung zwischen dem Betätigungsteil und dem dritten Ringkörper vermieden, was der Montage- und Service-Freundlichkeit entgegenkommt und dennoch ein wirksames Anheben des dritten Ringkörpers mittels des jeweiligen Hubkolbens gewährleistet.

Bei einer weiteren bevorzugten Ausführungsform der erfindungsgemäßen Rundschaltvorrichtung ist der vierte Ringkörper über mehrere längs seines Außenumfanges verteilte Stehbolzen mit dem Ständer fest verbunden und der jeweilige Stehbolzen ist zumindest teilweise von dem dritten Ringkörper umfaßt und aufgenommen. Aufgrund dieser Stehbolzen, die mit dem Ständer fest verbunden sind, ist eine feste Fixierung des Ringkörpers in der Radialausnehmung im Rundschalttisch verwirklicht mit der Folge, daß eine steife Führung für den dritten Ringkörper derart erreicht ist, daß die Planverzahnungen definiert und spielfrei stirnseitig miteinander in Eingriff bringbar sind.

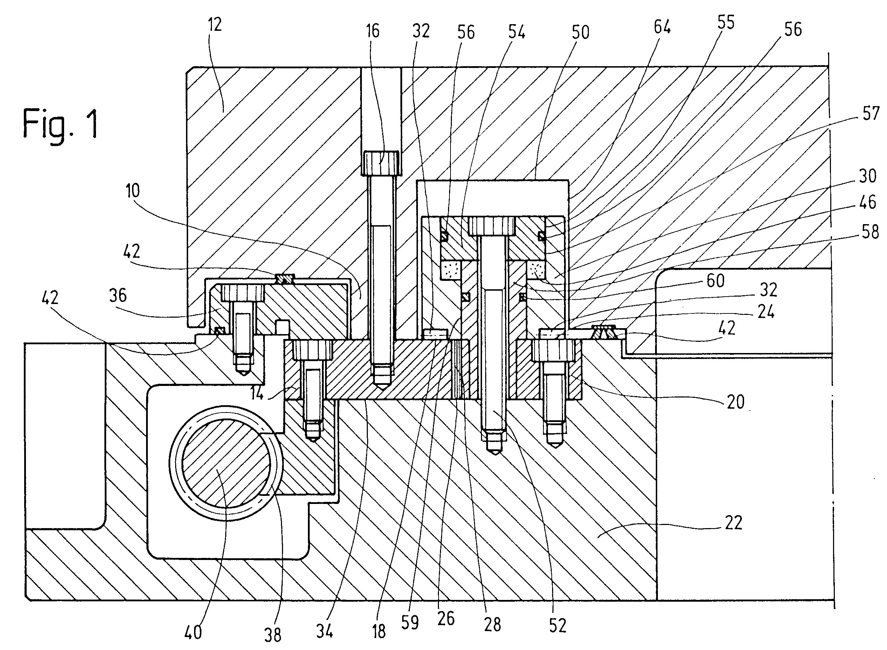

Weitere vorteilhafte Ausgestaltungen ergeben sich aus den übrigen Ansprüchen. In der Zeichnung ist ein Ausführungsbeispiel der Rundschaltvorrichtung dargestellt, wobei die einzelnen Figuren 1 bis 3 den Gegenstand der Erfindung zur Hälfte im Längsschnitt schematisch darstellen, wobei die übrige, jeweils nicht dargestellte Hälfte bis auf den Antrieb im wesentlichen symmetrisch zu der gezeigten Anordnung ausgebildet ist.

Es zeigen:
- Fig.1 bis 3: voneinander verschiedene segmentartige Längsschnitte durch die erfindungsgemäße Rundschaltvorrichtung.

An einem Ringvorsprung 10 nach der Fig.1, der in axialer Richtung an einem Rundschalttisch 12 vorsteht, ist ein erster Ringkörper 14 derart befestigt, daß er an dem Ringvorsprung 10 flächig anliegt. Für die dahingehende Befestigung sind Schrauben 16 vorgesehen. Zur Lagesicherung der angesprochenen Teile aneinander dienen nicht dargestellte Stifte. Der erste Ringkörper 14 trägt auf seiner Oberseite im Bereich seines inneren Randes eine erste Planverzahnung 18. Koaxial zum ersten Ringkörper 14 ist ein zweiter Ringkörper 20 angeordnet, der in einer Ausnehmung eines Ständers 22 der Vorrichtung sitzt. Der zweite Ringkörper 20 trägt ebenfalls auf seiner Oberseite eine zweite Planverzahnung 24. Die Planverzahnungen 18 und 24 liegen auf ein und derselben Ebene und weisen die gleichen Zähnezahlen auf. Die Zähne der beiden Planverzahnungen 18 und 24 selbst liegen in radialer Richtung hintereinander angeordnet. Zwischen den beiden Ringkörpern 14 und 20 sind in einem Käfig 26 Rollen 28 angeordnet. Diese Rollen 28 bilden zusammen mit den einander zugewandten Zylinderflächen der beiden Ringkörper 14 und 20 das Radiallager für den Rundschalttisch 12.

Oberhalb der beiden Ringkörper 14 und 20 ist ein dritter Ringkörper 30 angeordnet, der auf seiner den beiden Ringkörpern 14 und 20 zugewandten Seite eine deren Planverzahnungen 18 und 24 entsprechend ausgebildete dritte Planverzahnung 32 mit zwei zugeordneten Verzahnungsbahnen trägt. Der Ringkörper 14 ist auf einer ebenen Lagerstelle 34 des Ständers 22 gelagert. Er ist gegen Abheben von seiner Lagerstelle 34 durch einen Sicherungsring 36 gesichert, der am Ständer 22 befestigt ist und den äußeren Rand des Ringkörpers 14 übergreift. An der Unterseite des ersten Ringkörpers 14 ist im Bereich seines äußeren Randes ein Zahnring 38 befestigt, der mit einer von einem Motor (nicht dargestellt) beidseitig antreibbaren Schnecke 40 kämmt, die im Ständer 22 drehbar gelagert ist.

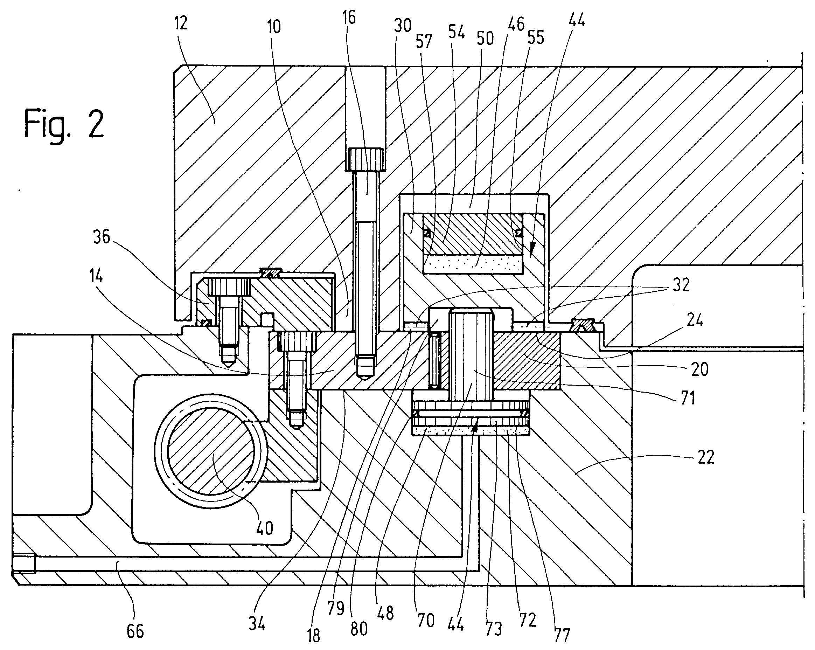

Die Lagerstelle 34 kann eine ringförmige Schmiernut (nicht dargestellt) aufweisen und am Sicherungsring 36 kann an seinem den Ringkörper 14 überragenden Teil ebenfalls eine ringförmige Schmiernut (nicht dargestellt) vorgesehen sein. Ferner können zwischen dem Rundschalttisch 12 einerseits und dem Sicherungsring 36 oder dem Ständer 22 andererseits Dichtringe 42 vorgesehen sein. Mit der in der Fig.2 als Ganzes mit 44 bezeichneten Hub- und Senkvorrichtung läßt sich der dritte Ringkörper 30 mit seiner dritten Planverzahnung 32 außer Eingriff bzw. in Eingriff mit den anderen ringförmigen Planverzahnungen 18 und 24 bringen. Der dritte Ringkörper 30 ist in einer Radialausnehmung 50 im Rundschalttisch 12 angeordnet und eine Hohlkammer 46, die innerhalb des dritten Ringkörpers 30 angeordnet ist, ist von einem vierten, mit dem Ständer 22 über Schrauben 52 fest verbundenen Ringkörper 54 (Fig.1) umschlossen, wobei der vierte Ringkörper 54 längs seines Innen- und Außenumfanges angebrachte Dichtringe 56 aufweist, die in dichtender Anlage mit den Seitenwänden einer umlaufend angeordneten Ringnut 57 des dritten Ringkörpers 30 sind. Der vierte Ringkörper 54 ist, wie dies insbesondere die Fig.1 zeigt, über mehrere längs seines geschlossenen Außenumfanges verteilte zylindrische Stehbolzen 58, die von den Schrauben 52 durchgriffen sind, mit dem Ständer 22 fest verbunden und der vierte Ringkörper 54 und der jeweilige Stehbolzen 58 sind von dem dritten Ringkörper 30 zumindest teilweise umfaßt und in diesem aufgenommen.

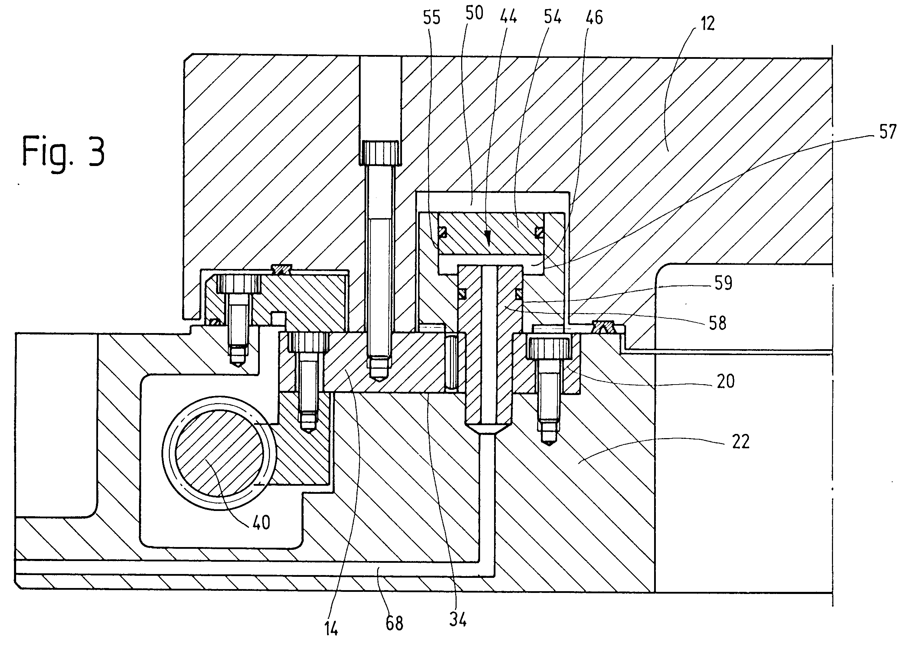

Der dritte Ringkörper 30 ist längs den Stehbolzen 58 entlang einer weiteren Innenführung 59 axial verfahrbar geführt, wobei in jeder Verfahrstellung des dritten Ringkörpers 30 dieser dichtend an dem Dichtring 60 des Stehbolzens 58 anliegt für die Verbindung der jeweiligen Schraube 52, die den vierten Ringkörper 54 gegenüber dem Ständer 22 auf Distanz hält. Mit diesem Ständer 22 verbunden durchgreift die jeweilige Schraube 52 den jeweils ihr zugeordneten zylindrischen Stehbolzen 58, der mit einem sich verjüngenden Fortsatz den zweiten Ringkörper 20 durchgreift. Der nach oben sich im Hinblick auf seine Innenbreite absatzweise vergrößernde dritte Ringkörper 30 umschließt gemäß der Darstellung nach der Fig.1 zusammen mit dem Ringkörper 54 und dem jeweiligen Stehbolzen 58 den Hohlraum 46, der eine Art Ringkanal ausbildet und in sich bis auf eine Hydraulik-Zu- und -abfuhrleitung 68 (s.Fig.3) geschlossen ist. Vor und hinter dem Durchgriffsbereich des jeweiligen Stehbolzens 58 verläuft der Hohlraum 46 durchgängig.

Die Versorgung des angesprochenen ersten Hohlraumes 46 mit Fluid geschieht über die Fluid-Zu- und -abfuhrleitung 68, wie sie in der Fig.3 dargestellt ist, die gegenüber der Darstellung nach den Fig.1 und 2 einen um beispielsweise 20° radial versetzten Längsschnitt durch die Vorrichtung wiedergibt. Die Leitung 68 durchgreift einen zugeordneten weiteren Stehbolzen 58 und mündet an ihrem freien Ende in den Hohlraum 46. Bei kleineren Rundschaltvorrichtungen kann durchaus jeweils eine Hub- und Senkvorrichtung 44 mit einer Fluid-Zu- und -abfuhrleitung für die erste Hohlkammer 46 genügen; bei größeren Vorrichtungen können jedoch umfangsseitig an dem Rundschalttisch mehrere mit Hydrauliköl beaufschlagbare Leitungen sowie Hub- und Senkvorrichtungen vorhanden sein. Ansonsten läßt sich von einer zentralen Stelle aus mit nur wenigen Bauteilen der Hub- und Senkvorgang auslösen.

Wie insbesondere die Fig.2 zeigt, wird der dritte Ringkörper 30 unter Einwirkung des Druckmittels im ersten Hohlraum 46 nach unten gedrückt und verriegelt in der in der Fig.2 gezeigten Stellung die beiden Planverzahnungen 18 und 24 von erstem Ringkörper 14 und zweitem Ringkörper 20 miteinander. Zum Lösen dieser Verriegelungsstellung über den dritten Ringkörper 30 wirkt dieser mit einem Hubkolben 70 der als Ganzes mit 44 bezeichneten Hub- und Senkvorrichtung zusammen, der einmal axial längsverfahrbar in dem zweiten Ringkörper 20 und zum anderen mit seinem verbreiterten Flansch bzw. der Druckfläche 77 in einer Radialausnehmung 72 im Ständer 22 geführt ist. Unterhalb der Druckfläche 77 ist eine weitere zweite Hohlkammer 48 von der Radialausnehmung 72 sowie der Unterseite des Hubkolbens 70 in dichtender Form begrenzt und ist an eine weitere Zu- und Abfuhrleitung 66 für Hydrauliköl angeschlossen. Wird nun die erste Hohlkammer 46 drucklos gemacht und die zweite Hohlkammer 48 mit Druckmittel beaufschlagt, wird der dritte Ringkörper 30 mit seiner dritten Planverzahnung 32 angehoben und die Planverzahnungen geraten derart außer Eingriff miteinander, daß der Rundschalttisch 12 längs seiner Mittendrehachse radial verdreht werden kann. Die in der Fig.2 dargestellte Hub- und Senkvorrichtung 44 kann bei kleineren Rundschaltvorrichtungen nur einmal vorhanden sein und gleichmäßig längs des Radialumfanges der Vorrichtung mehrfach angeordnet bei größeren Vorrichtungen den dritten Ringkörper 30 als Ganzes oder in Einzelsegmente (nicht dargestellt) unterteilt heben und senken.

Der vierte feststehende Ringkörper 54 bildet längs seines Innen- und Außenumfanges die Führung 55 für das Verschieben des dritten Ringkörpers 30 und greift in die Ringnut 57 des dritten Ringkörpers 30 ein. Des weiteren sind die Planverzahnungen 18,24,32 von dem dritten Ringkörper 30 und bündig mit diesem abschließend abgedeckt, wobei der in der Hohlkammer 46 erzeugbare Fluiddruck ebenso wie der Kolbendruck des Hubkolbens 70 zentrisch zwischen den drei Planverzahnungen 18,24,32 verlaufend auf diese einwirkt. Für das Zusammenwirken des Hubkolbens 70 mit dem dritten Ringkörper 30 ist ein Betätigungsteil 71 des Hubkolbens 70 unter Druchgriff des zweiten Ringkörpers 20 in berührender Anlage mit der Unterseite des dritten Ringkörpers 30, der in diesem Bereich mit einer Radialausnehmung 79 derart versehen ist, daß in einem Querschnitt, wie dies die Fig.2 zeigt, im Bereich des jeweiligen Hubkolbens 70 der dritte Ringkörper 30 die Form eines "H" hat. Der Betätigungsteil 71 ist gegenüber dem unteren Kolbenteil 73 mit der Druckfläche 77 im Durchmesser reduziert. Der im Durchmesser mithin verbreiterte Kolbenteil 73 weist außenumfangsseitig einen Dichtring 80 auf, der die weitere Hohlkammer 48 gegenüber der Umgebung und dem Übergang von Ständer 22 zu Rundschalttisch 12 abdichtet.

Sind die Planverzahnungen 18,24,32, wie in der Fig.2 gezeigt, in Eingriff miteinander, schließt die Oberseite des vierten Ringkörpers 54 bündig mit der Oberseite des dritten Ringkörpers 30 ab. Der ansonsten gemäß den Darstellungen in den Fig.1 und 3 im wesentlichen U-förmige Querschnitt des dritten Ringkörpers 30 erlaubt über entsprechend den Stehbolzen 58 angepaßte Ausnehmungen in seinem Bodenteil eine weitere mittenzentrierte Längsführung.

## Patentansprüche

1. Rundschaltvorrichtung mit einer ersten Planverzahnung (18), die auf einem mit einem Rundschalttisch (12) verbundenen ersten Ringkörper (14) angeordnet ist, mit einer zweiten Planverzahnung (24), die auf einem mit einem feststehenden Ständer (22) verbundenen zweiten Ringkörper (20) angeordnet ist, mit einer auf einem axial verschiebbaren dritten Ringkörper (30) angeordneten dritten Planverzahnung (32), die mittels einer hydraulisch betätigbaren Hubvorrichtung und einer Senkvorrichtung außer Eingriff bzw. in Eingriff mit den anderen ringförmigen Planverzahnungen (18,24) bringbar ist, und mit einem den Rundschalttisch (12) drehbar auf dem Ständer (22) lagernden Radiallager (26,28), wobei die Senkvorrichtung hydraulisch betätigbar ist und mindestens eine mit Fluid befüllbare Hohlkammer (46) aufweist, die zum einen von dem dritten Ringkörper (30) und zum anderen von einem vierten feststehenden Ringkörper (54) begrenzt ist, der unter Bildung einer Führung (55) für das Verschieben des dritten Ringkörpers (30) in eine Ringnut (57) des dritten Ringkörpers (30) eingreift, dadurch gekennzeichnet, daß die Hubvorrichtung mindestens einen Hubkolben (70) aufweist, der axial verfahrbar innerhalb des Ständers (22) gelagert ist und mit dem dritten Ringkörper (30) zusammenwirkt und daß der vierte Ringkörper (54) unter Bildung der Führung (55) längs seines Innen- und Außenumfanges in die Ringnut (57) des dritten Ringkörpers (30) eingreift.

2. Rundschaltvorrichtung nach Anspruch 1, dadurch gekennzeichnet, daß der dritte Ringkörper (30) in einer Radialausnehmung (50) im Rundschalttisch (12) angeordnet ist, daß die beiden anderen Ringkörper (14,20) koaxial und mindestens mit ihren Planverzahnungen (18,24) auf gleicher Ebene angeordnet sind sowie gleiche Zähnezahlen und radial ausgerichtete Zähne aufweisen.

3. Rundschaltvorrichtung nach Anspruch 1 oder 2, dadurch gekennzeichnet, daß die drei Planverzahnungen (18,24,32) von dem dritten Ringkörper (30) und bündig mit diesem abschließend abgedeckt sind und daß der in der Hohlkammer (46) erzeugbare Fluiddruck ebenso wie der Kolbendruck des Hubkolbens (70) zentrisch zwischen den drei Planverzahnungen (18,24,32) verlaufend auf diese einwirkt.

4. Rundschaltvorrichtung nach einem der Ansprüche 1 bis 3, dadurch gekennzeichnet, daß für das Zusammenwirken des Hubkolbens (70) mit dem dritten Ringkörper (30) ein Betätigungsteil (71) des Hubkolbens (70) unter Durchgriff des zweiten Ringkörpers (20) in berührender Anlage mit dem dritten Ringkörper (30) ist.

5. Rundschaltvorrichtung nach einem der Ansprüche 1 bis 4, dadurch gekennzeichnet, daß der vierte Ringkörper (54) über mehrere, längs seines Außenumfanges verteilte Stehbolzen (58) mit dem Ständer (22) fest verbunden ist und daß der jeweilige Stehbolzen (58) zumindest teilweise von dem dritten Ringkörper (30) umfaßt und aufgenommen ist.

6. Rundschaltvorrichtung nach einem der Ansprüche 1 bis 5, dadurch gekennzeichnet, daß die hydraulisch betätigbare Hub- und Senkvorrichtung (44) über einen weiteren, mit Fluid befüllbaren Hohlraum (48) verfügt und daß alternierend für das Heben und Senken des dritten Ringkörpers (30) die Hohlräume (46,48) mit Fluid befüllbar oder entleerbar sind.

7. Rundschaltvorrichtung nach Anspruch 6, dadurch gekennzeichnet, daß der weitere Hohlraum (48) von dem jeweiligen Hubkolben (70) begrenzt ist, der einen gegenüber dem Betätigungsteil (71) im Durchmesser verbreiterten Kolbenteil (73) aufweist, der eine Druckfläche (77) für das in dem weiteren Hohlraum (48) befindliche Fluid bildet.

8. Rundschaltvorrichtung nach einem der Ansprüche 1 bis 7, dadurch gekennzeichnet, daß über den Umfang des dritten Ringkörpers (30) zumindest segmentweise in radialen Abständen voneinander mehrere Hubkolben (70) angeordnet sind.

## Claims

1. Indexing device having a first crown gear (18), which is arranged on a first annular body (14) joined to an indexing table (12), having a second crown gear (24), which is arranged on a second annular body (20) joined to a fixed pillar (22), having a third crown gear (32) arranged on an axially displaceable third annular body (30), which third crown gear can be brought into and taken out of engagement with the other annular crown gears (18, 24) by means of a hydraulically operable lifting device and a lowering device, and having a radial bearing (26, 28) supporting the indexing table (12) so that it is rotatable on the pillar (22), the lowering device being hydraulically operable and comprising at least one hollow chamber (46) fillable with fluid, which chamber is bounded on the one hand by the third annular body (30) and on the other hand by a fourth fixed annular body (54) that engages in an annular groove (57) in the third annular body (30) to form a guide (55) for displacement of the third annular body (30), characterised in that the lifting device comprises at least one lifting piston (70), which is mounted so as to be axially displaceable inside the pillar (22) and co-operates with the third annular body (30), and that the fourth annular body (54) engages along its inner and outer circumference in the annular groove (57) of the third annular body (30) to form the guide (55).

2. Indexing device according to claim 1, characterised in that the third annular body (30) is arranged in a radial recess (50) in the indexing table (12), that the two other annular bodies (14, 20) are arranged coaxially and at least with their crown gears (18,24) in the same plane and comprise identical tooth numbers and radially aligned teeth.

3. Indexing device according to claim 1 or 2, characterised in that the three crown gears (18, 24, 32) are covered by the third annular body (30) and terminate flush therewith and that the fluid pressure that can be produced in the hollow chamber (46), in the same way as the piston pressure of the lifting piston (70), acts centrally between and extending towards the three crown gears (18, 24, 32).

4. Indexing device according to any one of claims 1 to 3, characterised in that for co-operation of the lifting piston (70) with the third annular body (30) an operating part (71) of the lifting piston (70), having passed through the second annular body (20), is in contact with the third annular body (30).

5. Indexing device according to any one of claims 1 to 4, characterized in that the fourth annular body (54) is fixedly connected to the pillar (22) by way of a plurality of studs (58) distributed along its outer periphery and that the respective stud (58) is at least partly surrounded and received by the third annular body (30).

6. Indexing device according to any one of claims 1 to 5, characterised in that the hydraulically operable lifting and lowering device (44) has a further hollow chamber (48) fillable with fluid and that thee hollow chambers (46, 48) are arranged to be alternately filled with and emptied of fluid for the lifting and lowering of the third annular body (30).

7. Indexing device according to claim 6, characterised in that the further hollow chamber (48) is bounded by the respective lifting piston (70), which has a piston part (73) of enlarged diameter compared with the operating part (71), which piston part (73) forms a pressure face (77) for the fluid located in the further hollow chamber (48).

8. Indexing device according to any one of claims 1 to 7, characterised in that around the circumference of the third annular body (30) there is arranged a plurality of lifting pistons (70) radially spaced from one another at least in a segment manner.

## Revendications

1. Dispositif d'indexage comprenant une première denture plane (18) qui est disposée sur un premier corps annulaire (14) relié à un plateau d'indexage (12), une deuxième denture plane (24) qui est disposée sur un deuxième corps annulaire (20) relié à un montant fixe (22), une troisième denture plane (32) qui est disposée sur un troisième corps annulaire (30) déplaçable axialement et qui peut être mise hors de prise ou en prise avec les autres dentures planes annulaires (18, 24) au moyen d'un dispositif de levage à commande hydraulique et d'un dispositif d'abaissement, ainsi qu'un palier (26, 28) supportant le plateau d'indexage (14) rotatif sur le montant (22), le dispositif d'abaissement étant à commande hydraulique et comprenant au moins une chambre (46) pouvant être emplie de fluide et délimitée d'une part par le troisième corps annulaire (30) et d'autre part par un quatrième corps annulaire fixe (54) qui pénètre dans une gorge annulaire (57) du troisième corps annulaire (30) en formant un guide (55) du déplacement du troisième corps annulaire (30), caractérisé en ce que le dispositif de levage comprend au moins un piston de levage (70) qui est monté déplaçable axialement à l'intérieur du montant (22) et qui coopère avec le troisième corps annulaire (30) et en ce que le quatrième corps annulaire (54) pénètre dans la gorge annulaire (57) du troisième corps annulaire (30) en formant le guide (55) le long de sa circonférence intérieure et de sa circonférence extérieure.

2. Dispositif d'indexage selon la revendication 1, caractérisé en ce que le troisième corps annulaire (30) est disposé dans une cavité radiale (50) du plateau d'indexage (12), en ce que les deux autres corps annulaires (14, 20) sont disposés coaxialement et de manière qu'au moins leurs dentures planes (18, 24) soient sur le même plan et aient le même nombre de dents et des dents orientées radialement.

3. Dispositif d'indexage selon la revendication 1 ou 2, caractérisé en ce que les trois dentures planes (18, 24, 32) sont recouvertes par le troisième corps annulaire (30) en étant isolées et à fleur de celui-ci et en ce que la pression du fluide pouvant être produite dans la chambre (46), de même que la pression du piston de levage (30) agissent sur les trois dentures planes (18, 24, 32) en étant centrées entre celles-ci.

4. Dispositif d'indexage selon l'une des revendications 1 à 3, caractérisé en ce qu'un élément d'actionnement (71) que comporte le piston de levage (70) est en appui de contact avec le troisième corps annulaire (30) et passe à travers le deuxième corps annulaire (20) pour la coopération du piston de levage (70) avec le troisième corps annulaire (30).

5. Dispositif d'indexage selon l'une des revendications 1 à 4, caractérisé en ce que quatrième corps annulaire (54) est solidarisé avec le montant (22) par plusieurs tirants (58) répartis le long de sa circonférence extérieure et en ce que chaque tirant (58) est entouré et logé au moins partiellement par le troisième corps annulaire (30).

6. Dispositif d'indexage selon l'une des revendications 1 à 5, caractérisé en ce que le dispositif de levage et d'abaissement (44) à commande hydraulique comporte une autre chambre (48) pouvant être emplie de fluide et en ce que les chambres (46, 48) peuvent être emplies de fluide ou en être vidées en alternance pour le soulèvement et l'abaissement du troisième corps annulaire (30).

7. Dispositif d'indexage selon la revendication 6, caractérisé en ce que l'autre chambre (48) est délimitée par le piston particulier de levage (70) qui comprend une partie de piston (73) ayant un diamètre élargi par rapport à l'élément d'actionnement (71) et formant une surface de poussée (77) pour le fluide se trouvant dans l'autre chambre (48).

8. Dispositif d'indexage selon l'une des revendications 1 à 7, caractérisé en ce que plusieurs pistons de levage (70) sont disposés au moins par segments à distances radiales les uns des autres à la circonférence du troisième corps annulaire (30).
